# EUROPÄISCHE PATENTSCHRIFT

(11) **EP 1 670 655 B1**
(45) Veröffentlichungstag und Bekanntmachung des Hinweises auf die Patenterteilung: **13.02.2008**
(21) Anmeldenummer: 04786805.4
(22) Anmeldetag: 17.09.2004
(51) Int. Cl.: B60J 5/10, B60J 7/20, B60J 7/047, B60J 7/02

(54) **KRAFTFAHRZEUG MIT HECKKLAPPE UND ÖFFNUNGSFÄHIGEM DACHTEIL**
MOTOR VEHICLE WITH A HATCHBACK AND OPENING ROOF PART
VEHICULE AUTOMOBILE COMPRENANT UN HAYON ET UN ELEMENT DE TOIT OUVRANT

(30) Priorität: 30.09.2003 DE 10345276
(43) Veröffentlichungstag der Anmeldung: 21.06.2006
(73) Patentinhaber: Wilhelm Karmann GmbH, 49084 Osnabrück (DE)
(72) Erfinder: BUNSMANN, Winfried, 49143 Bissendorf (DE); WEISSMÜLLER, Olaf, 49565 Bramsche (DE); HESELHAUS, Udo, 49479 Ibbenbüren (DE)
(86) Internationale Anmeldenummer: PCT/DE2004/002086
(87) Internationale Veröffentlichungsnummer: WO 2005/032869

(56) Entgegenhaltungen:
- EP-A1- 0 989 009
- WO-A1-03/024731
- WO-A1-20/04037583
- WO-A2-03/076220
- DE-A1- 10 149 456
- DE-A1- 19 615 540

## Beschreibung

Die Erfindung betrifft ein Kraftfahrzeug mit einer zumindest in einer Stellung eine Heckscheibe umfassenden Heckklappe nach dem Oberbegriff des Anspruchs 1, wie aus DE 196 15540 A bekannt.

Es sind zahlreiche Fahrzeuge bekannt, die eine um eine im vorderen und oberen Bereich gelegene Achse aufschwenkbare und mit einer Heckscheibe versehene Heckklappe aufweisen. Die Klappe ist dabei häufig über schwanenhalsförmige Arme mit der eigentlichen Schwenkachse verbunden und gelangt daher mit ihrer vorderen Kante während des Aufschwenkens weiter nach vorne.

Dies kann jedoch hinderlich sein, wenn weiter vorne im Dach zu öffnende Dachteile gelegen sind, die mit der öffnenden Heckklappe kollidieren können.

Der Erfindung liegt das Problem zugrunde, bei Fahrzeugen eine möglichst große Dachöffnung bei dennoch platzsparender Ablagemöglichkeit der zu öffnenden Dachteile in der Karosserie zu ermöglichen.

Die Erfindung löst dieses Problem durch ein Kraftfahrzeug mit den Merkmalen des Anspruchs 1. Hinsichtlich weiterer vorteilhafter Ausgestaltungen der Erfindung wird auf die weiteren Ansprüche 2 bis 10 verwiesen.

Mit der Erfindung kann beim Öffnen der Heckklappe eine große Durchtrittsöffnung freigegeben werden, durch die sowohl vordere Dachteile als auch die Heckscheibe in die Karosserie überführbar sein können und der dennoch bei geschlossener Heckscheibe optisch vorteilhaft überdeckt ist.

Insbesondere wenn die seitlichen Rahmenteile der Heckklappe in deren geschlossener Stellung der fluchtend zu in Fahrtrichtung anschließenden und oberhalb von Seitenscheiben verlaufenden Abschnitten der Dachholme des Fahrzeugs liegen, ist bei geschlossener Heckklappe von dem Durchtrittsraum nichts zu bemerken.

Vorteilhaft ist es dabei möglich, daß der Durchtrittsraum gegenüber der lichten Weite zwischen den Dachholmen in Fahrzeugquerrichtung erweitert ist, so daß die zu versenkenden Dachteile eine sehr große Breite haben können und etwa auch noch mit seitlichen Führungsschienenabschnitten gemeinsam in der Karosserie versenkbar sein können. Wenn dazu die Dachteile transparent sind, ergibt sich auch in deren geschlossenem Zustand ein sehr helles, offenes Raumgefühl.

Trotz der Quererweiterung des Durchtrittsraums liegen vorteilhaft auch bei einer separat in Freigabestellung versenkbaren Heckscheibe und darüber geschlossenen seitlichen Rahmenteilen der Heckklappe die einer vertikalen Fahrzeuglängsmittelebene zugewandten Kanten der Dachholme und der seitlichen Rahmenteile der Heckklappe stufenlos fluchtend hintereinander, so daß auch dann keine Abstufung in den längs über das Fahrzeug laufenden Linien zu bemerken ist.

Insbesondere ist es zum Erhalt des Gepäckraums vorteilhaft, wenn die Heckscheibe in Freigabestellung nahezu vertikal gehalten ist, etwa hinter den Lehnen einer Rückbank.

Bei einer im wesentlichen U-förmigen Ausbildung der Heckklappe außerhalb der Heckscheibe kann die Heckklappe bei in Freigabestellung befindlicher Scheibe eine große, nach vorne durchgehende und nicht von einem Querträger unterbrochene Öffnung bilden. Das Freiluftgefühl ist dabei besonders ausgeprägt.

Weitere Vorteile und Merkmale der Erfindung ergeben sich aus in der Zeichnung zumindest schematisch dargestellten und nachfolgend beschriebenen Ausführungsbeispielen des Gegenstandes der Erfindung.

In der Zeichnung zeigt:
- Fig. 1: ein erfindungsgemäßes Kraftfahrzeug in perspektivischer Ansicht von schräg hinten mit einer geschlossenen Heckscheibe und einer in Schließstellung befindlichen Heckklappe sowie mit zwei weiteren, an die obere und in Fahrtrichtung vordere Kante anschließenden beweglichen Plattenteilen,
- Fig. 2: eine ähnliche Ansicht wie Fig. 1 nach Öffnung des vordersten Plattenteils,
- Fig. 3: eine ähnliche Ansicht wie Fig. 2 bei in Offenstellung befindlicher Heckklappe,

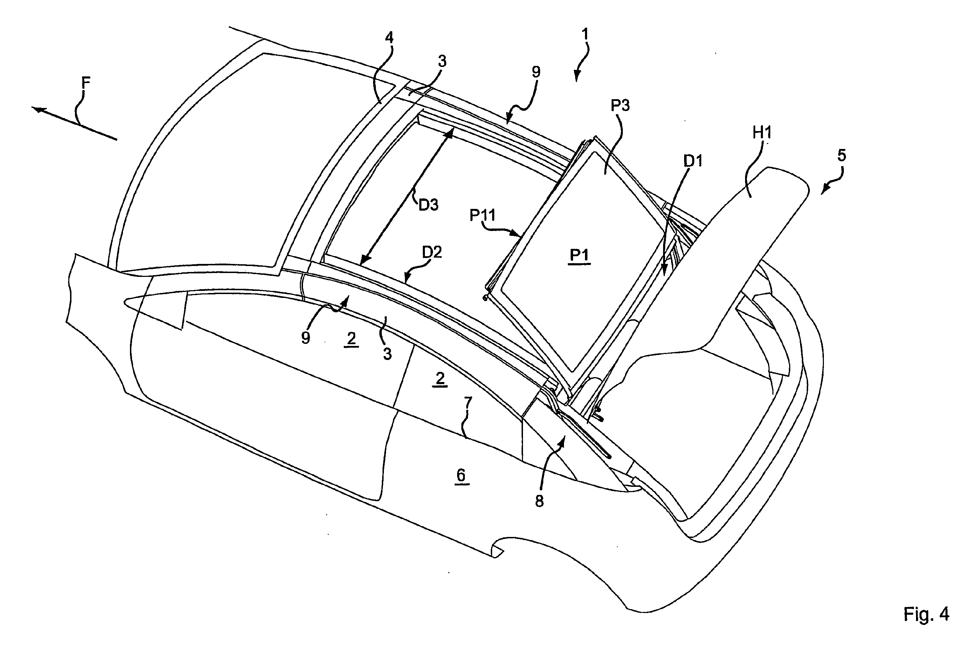

- Fig. 4: eine ähnliche Ansicht wie Fig. 3 während der Öffnung der beiden vorderen Plattenteile,

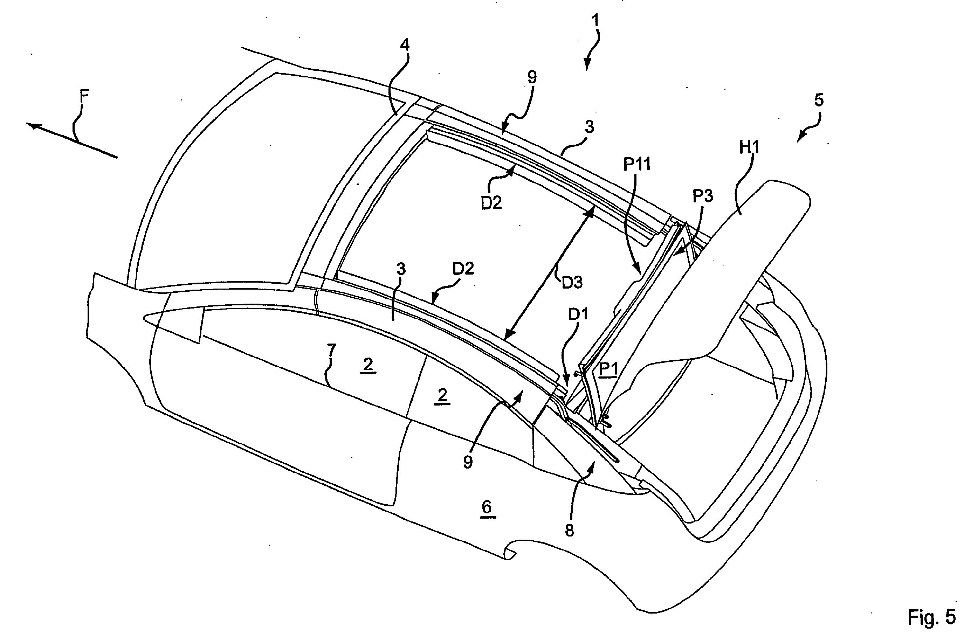

- Fig. 5: eine ähnliche Ansicht wie Fig. 4 bei weiter fortschreitender Öffnung der vorderen Plattenteile,

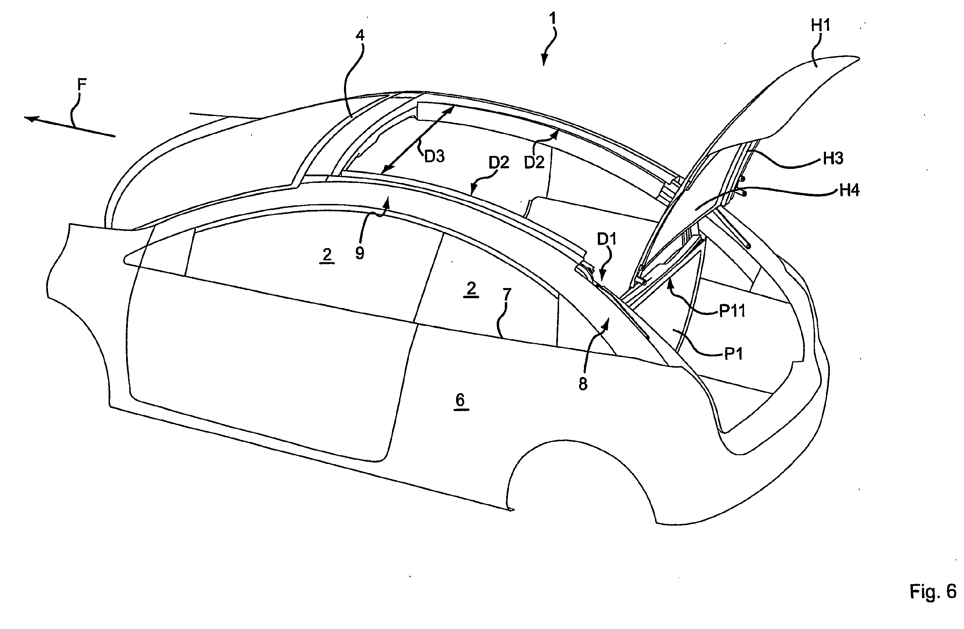

- Fig. 6: eine ähnliche Ansicht wie Fig. 5 mit im wesentlichen vertikal in der Karosserie abgelegten vorderen Plattenteilen,

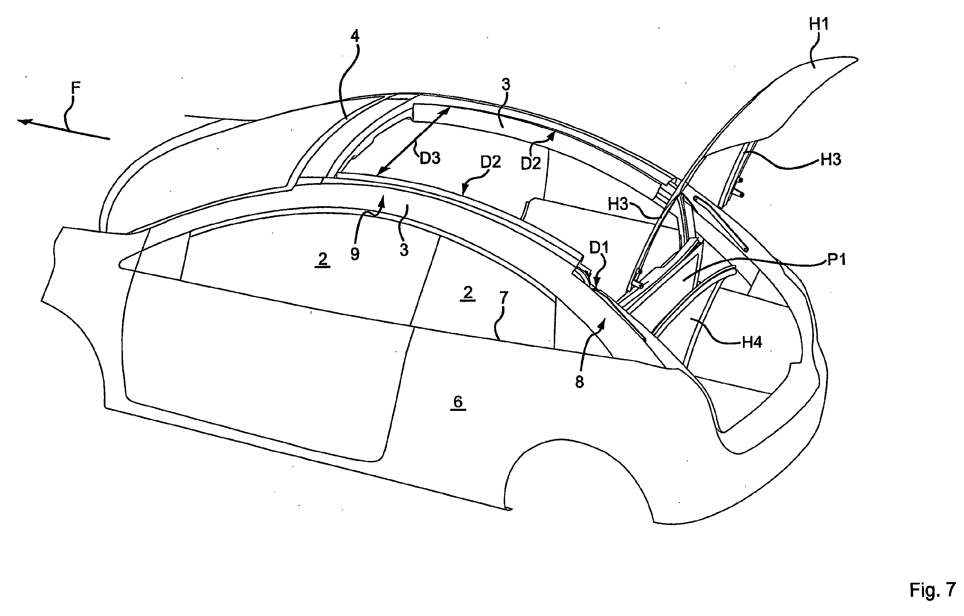

- Fig. 7: eine ähnliche Ansicht wie Fig. 6 mit zusätzlich in Freigabestellung in der Karosserie abgelegter Heckscheibe,
- Fig. 8: eine ähnliche Ansicht wie Fig. 7 nach Schließen der Heckklappe,
- Fig. 9: eine schematisierte Seitenansicht des Fahrzeugs in der Dachstellung nach Fig. 1,

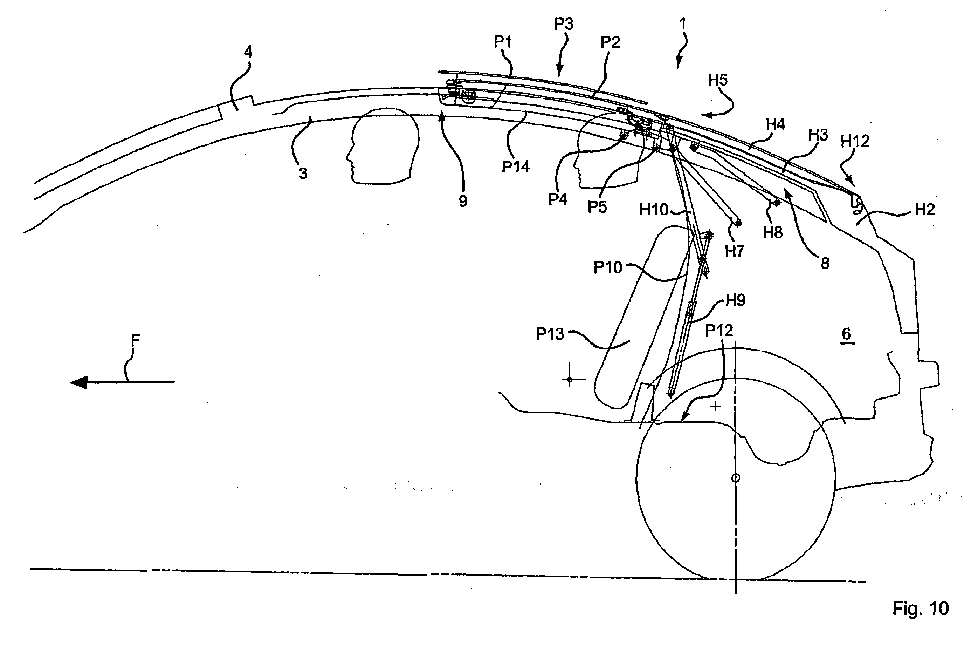

- Fig. 10: eine ähnliche Ansicht wie Fig. 9, jedoch nach Öffnung des vordersten Plattenteils entsprechend der Dachstellung nach Fig. 2,
- Fig. 11: eine ähnliche Ansicht wie Fig. 10, jedoch mit in Offenstellung befindlicher Heckklappe entsprechend der Dachstellung nach Fig. 3,
- Fig. 12: eine ähnliche Ansicht wie Fig. 11, jedoch während der Öffnung der beiden vorderen Plattenteile entsprechend der Dachstellung nach Fig. 4,
- Fig. 13: eine ähnliche Ansicht wie Fig. 12, jedoch während der weiter fortschreitenden Öffnung der vorderen Plattenteile entsprechend der Dachstellung nach Fig. 5,
- Fig. 14: eine ähnliche Ansicht wie Fig. 9, jedoch bei vollständig geöffneten vorderen Plattenteilen entsprechend der Dachstellung nach Fig. 6,
- Fig. 15: eine ähnliche Ansicht wie Fig. 14, jedoch bei Herausschwenken der Heckscheibe aus ihrer Schließstellung in der Heckklappe,
- Fig. 16: eine ähnliche Ansicht wie Fig. 15 bei weiter fortschreitender Öffnung der Heckscheibe,
- Fig. 17: eine ähnliche Ansicht wie Fig. 16 bei vollständig in Freigabestellung befindlicher Heckscheibe entsprechend der Stellung nach Fig. 7,
- Fig. 18: eine ähnliche Ansicht wie Fig. 17 nach Schließen der Heckklappe entsprechend der Stellung nach Fig. 8.

In den Zeichnungsfiguren ist generell ein mit einer Rückbank versehenes vier- oder fünfsitziges Kraftfahrzeug 1 dargestellt. Dies ist nicht zwingend. Auch kann beispielsweise ein Zweisitzer erfindungsgemäß ausgebildet sein.

Das Fahrzeug 1 umfaßt oberhalb seitlicher Scheiben 2 in sich jeweils starre Dachholme 3, die in Ansicht von oben im wesentlichen längs zur Fahrzeugerstreckung zwischen einem Windschutzscheibenrahmen 4 und dem Heckbereich 5 des Fahrzeugs liegen und in Seitenansicht bogenförmig verlaufen. Diese sind hier Bestandteil der Fahrzeugkarosserie 6.

Im hinteren Fahrzeugbereich 5 ist eine Heckklappe H1 vorgesehen. Diese ist hier im wesentlichen U-förmig ausgebildet mit einem unteren Querschenkel H2, der beispielsweise Teile der Rückleuchten und/oder einen Kennzeichenträger umfassen kann, und mit Seitenschenkeln H3, die in geschlossener Stellung der Heckklappe H1 in Fahrtrichtung F entsprechend dem Verlauf der Dachholme 3 vorwärts und aufwärts weisen. Zwischen den Teilen H2 und H3 ist in ihrer Schließstellung eine insbesondere starre Heckscheibe H4, die beispielsweise aus Kunststoff oder vorteilhaft Glas bestehen kann, aufgenommen. In dieser Stellung dienen die Seitenschenkel H3 somit als seitliche Rahmenteile der Heckscheibe H4. Die dabei in Fahrtrichtung F obere und vordere Kante H5 der Heckscheibe H4 bildet dabei-gleichzeitig auch die obere und vordere Kante der Heckklappe H1 aus und ist wegen deren U-Form von keinem Querträger untergriffen.

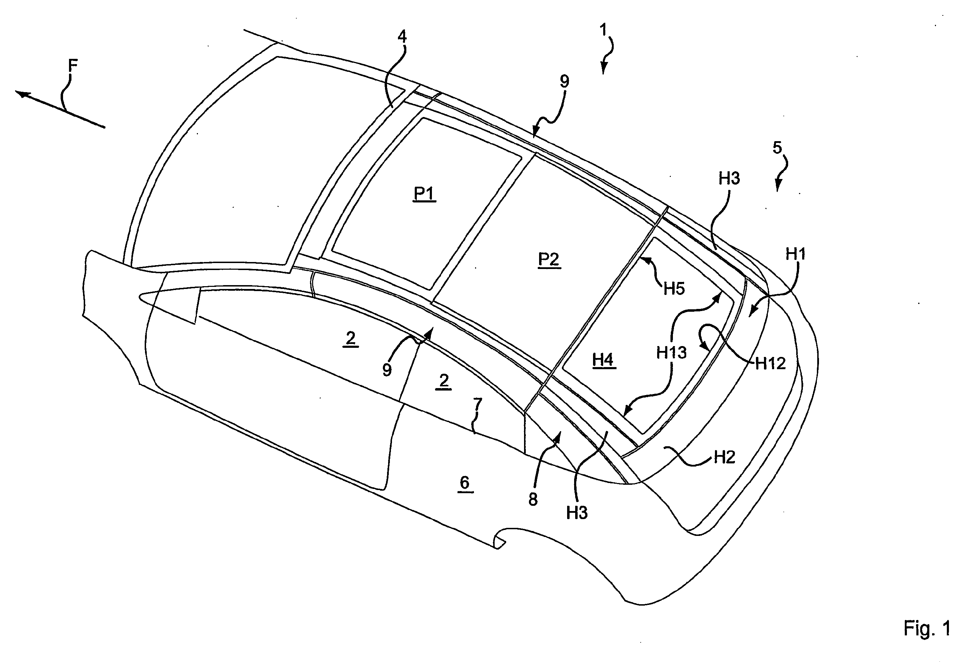

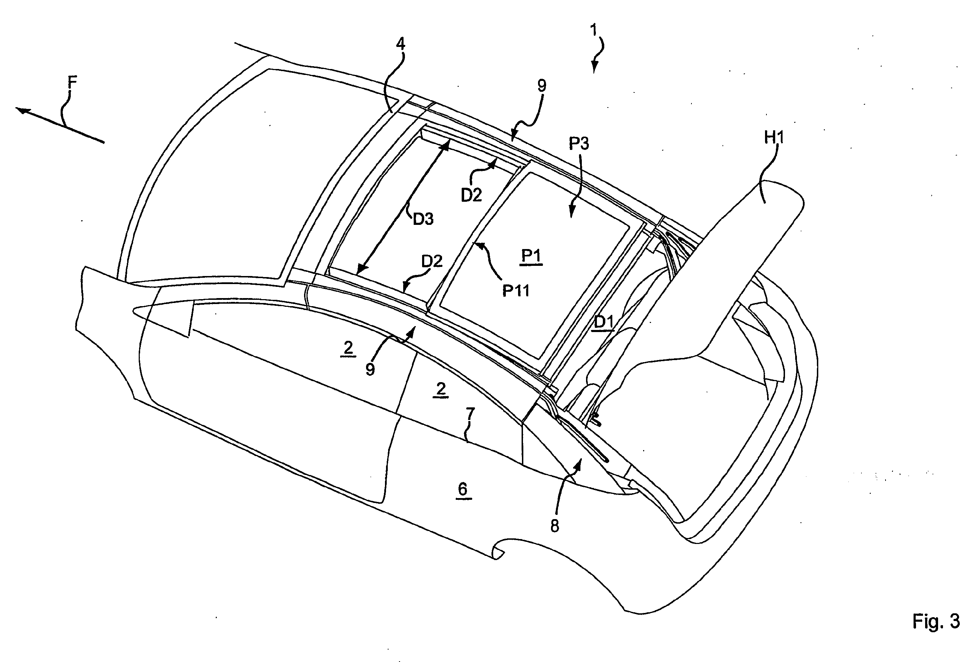

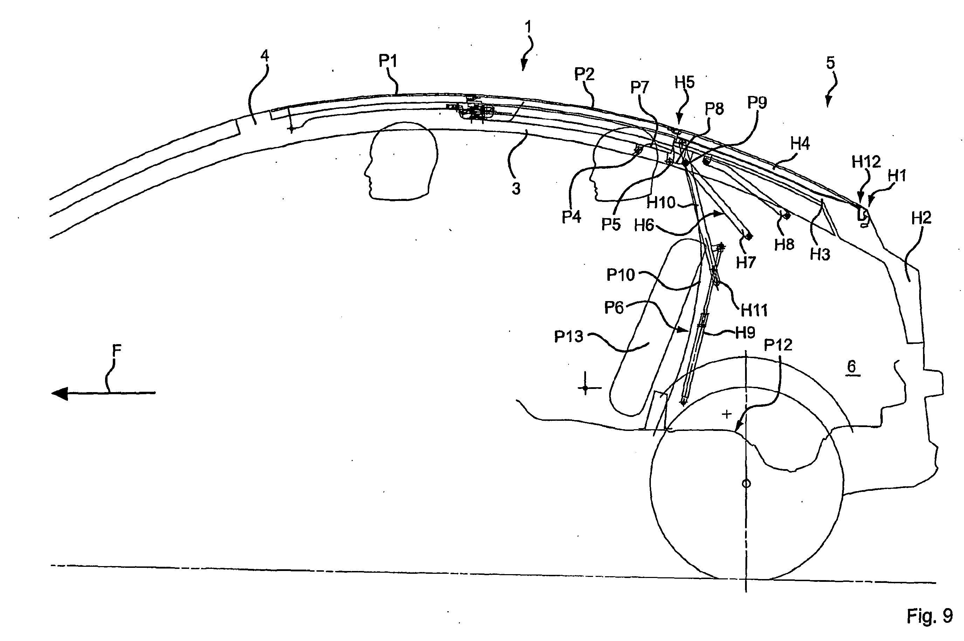

Die Heckklappe H1 ist insgesamt zwischen einer geschlossenen (Fig. 1) und einer offenen Stellung (Fig. 3) beweglich an der Karosserie 6 gehalten. Die Öffnungsbewegung ist keine reine Schwenkbewegung, sondern erfolgt derart, daß in ihrer Offenstellung die vordere Kante H5 der Heckklappe H1 gegenüber ihrer geschlossenen Stellung deutlich, vorzugsweise um mehr als 20 Zentimeter, nach hinten verlagert ist. Hierfür ist (Fig. 9 ff.) die Heckklappe H1 an jeder Fahrzeugseite zum Beispiel über ein Mehrgelenk, hier ein Viergelenk H6, gehalten. Dessen Lenker H7 und H8 sind jeweils seitlich in der Fahrzeugkarosserie 6, etwa im hinteren Bereich der Dachholme 3, angelenkt. Auf deren hinteren Abschnitten 8 liegen die seitlichen Rahmenteile 3 in geschlossener Stellung der Heckklappe H1 auf.

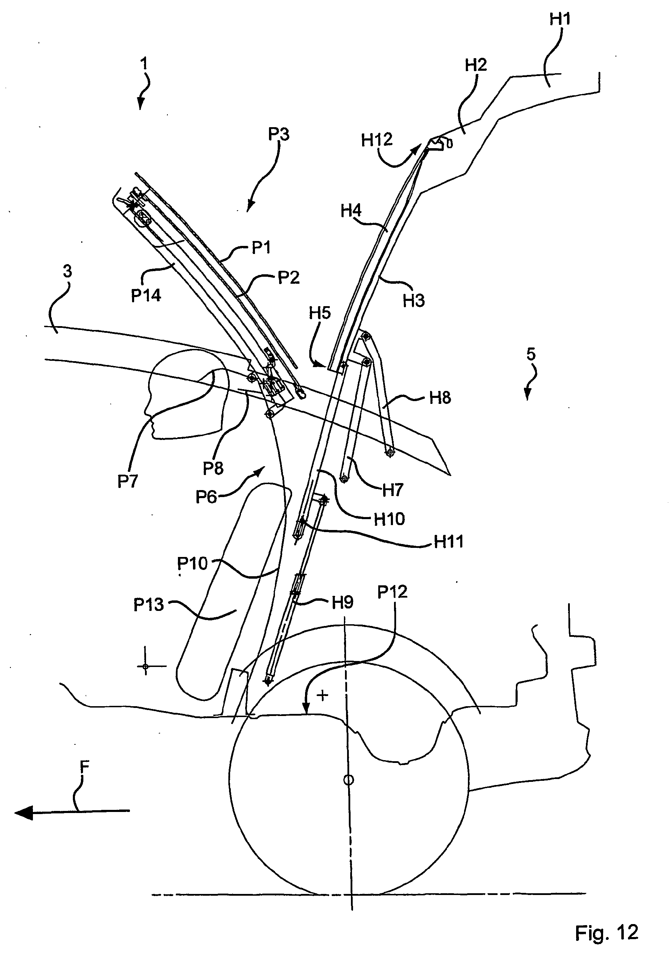

Aus der in den Figuren 3 und 12 gezeigten Offenstellung der Heckklappe H1 heraus ist die Heckscheibe H4 in eine separate Freigabestellung in die Fahrzeugkarosserie 6 absenkbar.

Hierfür ist beispielsweise die Heckscheibe H4 über seitlich in der Karosserie 6 angeordnete Gestängeteile H9, H10 mit dieser verbunden. Das Gestängeteil H9 ist dabei ein ein- und ausfahrbarer Zylinder, der wegen seiner Längenvariabilität in der Lage ist, auch bei geschlossener Heckscheibe H4 die Öffnungsbewegung der dann diese umfassenden Heckklappe H1 mitzugehen (Übergang von Fig. 1 zu Fig. 3).

Der Zylinder H9 ist einenends an der Karosserie 6 angelenkt. Er greift mit seinem freien Ende an einem weiter oberhalb an der Karosserie 6 angelenkten Lenker H10 an, wobei dieser Angriffspunkt zur Anlenkung H11 des Lenkers H10 beabstandet liegt und sich somit ein Hebelarm ergibt.

Der Lenker H10 greift mit seinem freien Ende seitlich der Oberkante H5 der Heckscheibe H4 an.

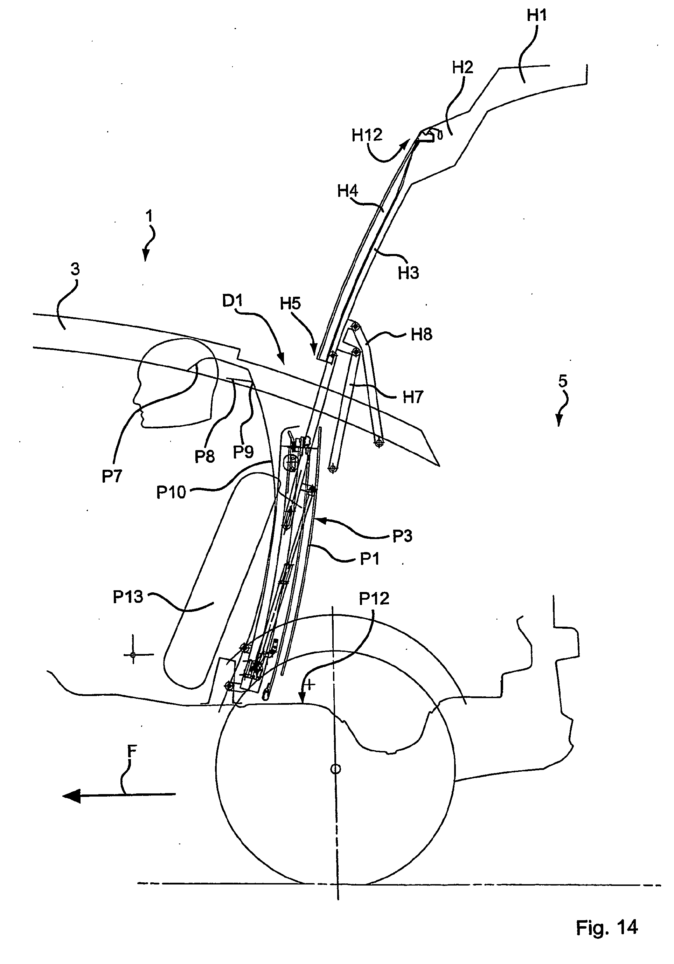

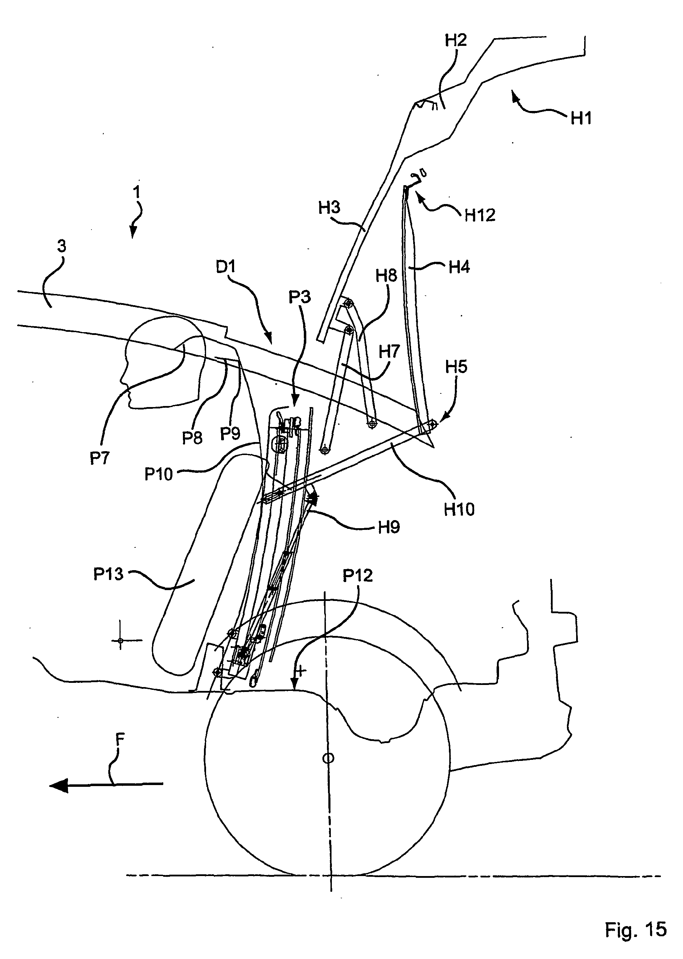

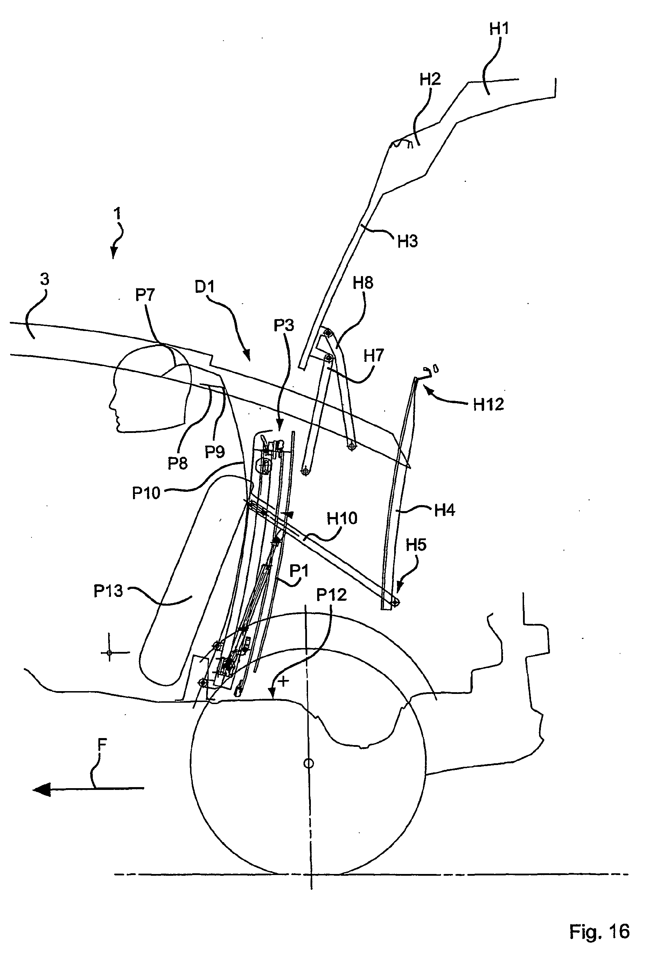

Um diese in Freigabestellung zu überführen, wird zunächst die Heckscheibe H4 an ihrem in geschlossener Stellung die untere Kante bildenden Ende H12 vom Mittelschenkel H2 der Heckklappe H1 entriegelt (Übergang von Fig. 14 zu Fig. 15), wobei die Scheibe H4 für eine manuelle Bedienung an ihren Seitenkanten H13 von einem Benutzer gehalten und nahezu parallel abwärts verlagert werden kann (Fig. 16). Dabei wird der Hebel H10 um das Gelenk H11 abwärts verschwenkt, und der Zylinder H9 fährt ein und schwenkt nach vorne. Damit wird die Heckscheibe H4 insgesamt zumindest nahezu vertikal und leicht nach vorne verlagert platzsparend abgelegt, hier im Paket mit weiteren Dachteilen, die unten noch näher erläutert sind.

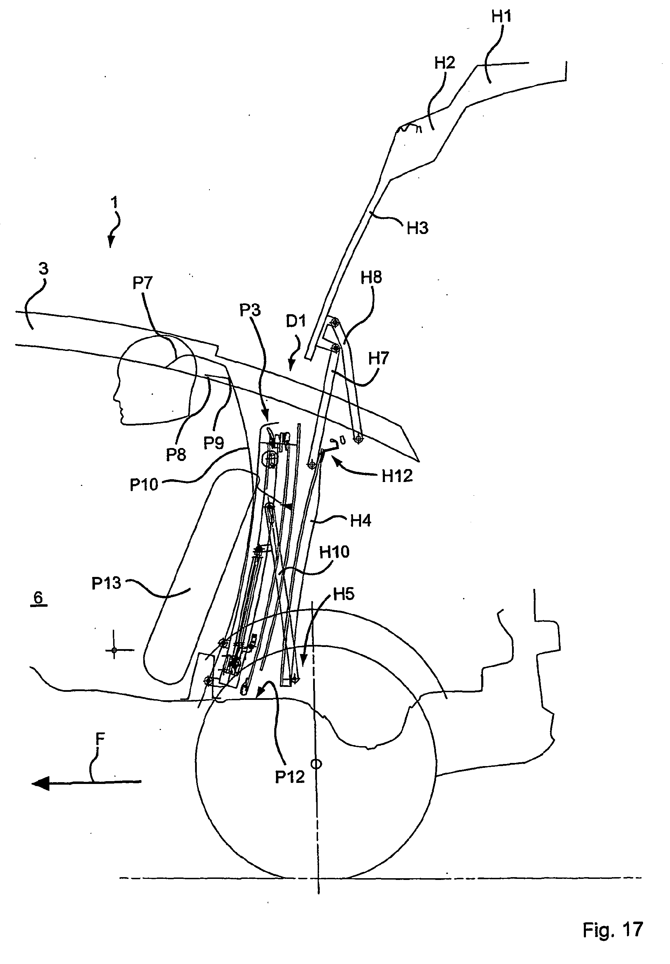

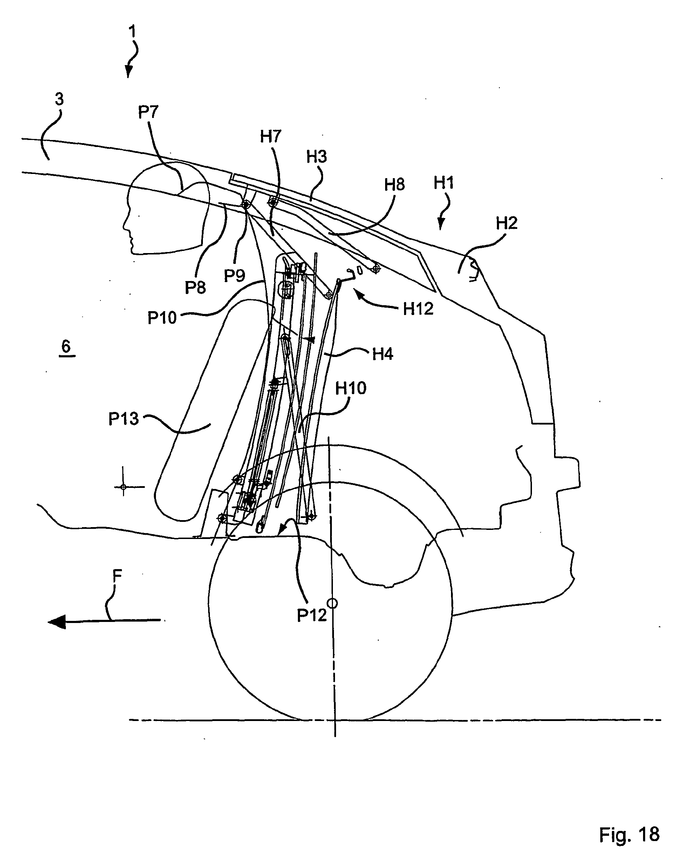

In dieser Freigabestellung (Fig. 17) ist die Heckscheibe H4 unterhalb einer seitlichen Fensterbrüstungslinie 7 der Karosserie 6 mit Abstand zur Heckklappe H1 gehalten. Der Raum zwischen den Seitenschenkeln H3 und dem unteren Querschenkel H2 der Heckklappe H1 ist vollständig geöffnet. Diese kann dann wieder geschlossen werden (Fig. 18).

Das Kraftfahrzeug 1 umfaßt in geschlossener Stellung der Heckscheibe H4 (Fig. 1) an ihre vordere Kante H5 unmittelbar anschließend und in Fahrtrichtung F vorgeordnet weitere bewegliche Plattenteile P1, P2. Ihre Anzahl ist je nach Dachlänge variabel; sie liegen im geschlossenen Zustand im wesentlichen horizontal, fluchtend hintereinander sowie fluchtend zu der Heckscheibe H4 und stützen sich unmittelbar oder mittelbar an den seitlichen Dachholmen 3 ab. Die - hier zwei - Dachteile P1 und P2 können aus unterschiedlichen Materialien, etwa metallischen, Glas- oder Kunststoffwerkstoffen, gebildet sein. Insbesondere können sie im wesentlichen transparent ausgebildet sein. Dabei empfiehlt es sich, um Schattenstreifen im Innenraum weitgehend zu vermeiden, die Dachteile P1, P2 in Fahrzeuglängsrichtung nicht zu schmal ausfallen zu lassen. Eine jeweilige Mindesterstreckung von 40 cm in Fahrzeuglängsrichtung ist daher vorteilhaft.

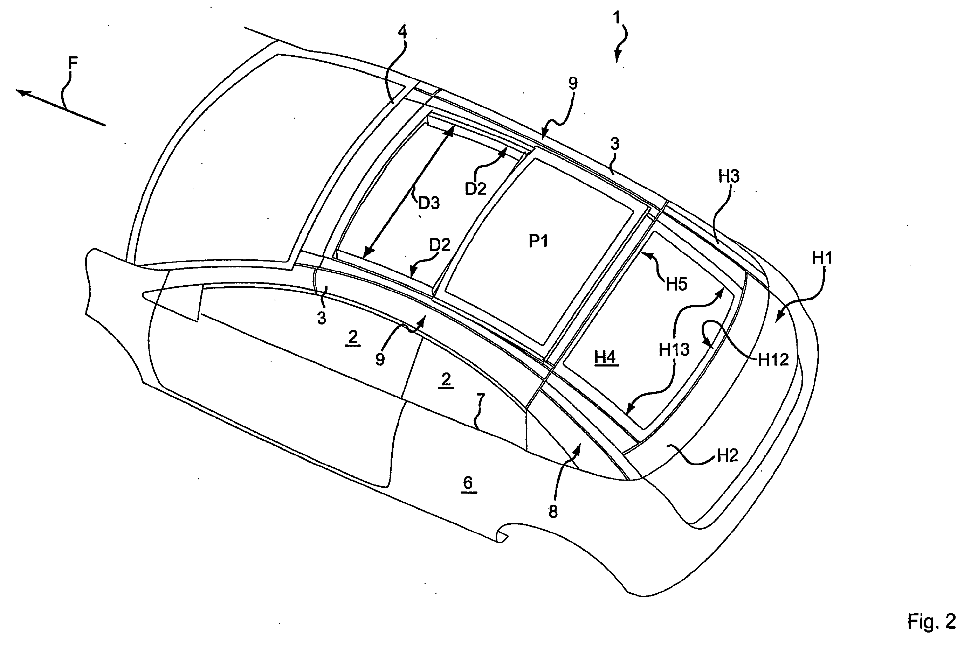

Das vordere Dachteil P1 ist aus der geschlossenen Stellung heraus nach Art eines Schiebedachs über das dahinter liegende Dachteil P2 verlagerbar und liegt in seiner geöffneten Stellung im wesentlichen parallel auf diesem (Fig. 2 ff.). Die so gebildete Stellung der Dachteile P1, P2 stellt eine mögliche dauerhafte Fahrstellung dar. Aus ihr heraus kann jedoch auch eine weitere Dachöffnung mit Abwärtsverlagerung der als Paket P3 übereinanderliegenden Dachteile P1 und P2 erfolgen, um diese innerhalb der Karosserie 6 abzusenken.

Hierfür ist das so gebildete Dachteilpaket P3 im hinteren Bereich des hinteren Dachteils P2 über zwei hintereinanderliegende Führungsrollen P4, P5 in einer seitlichen Führungsschiene P6 abgestützt.

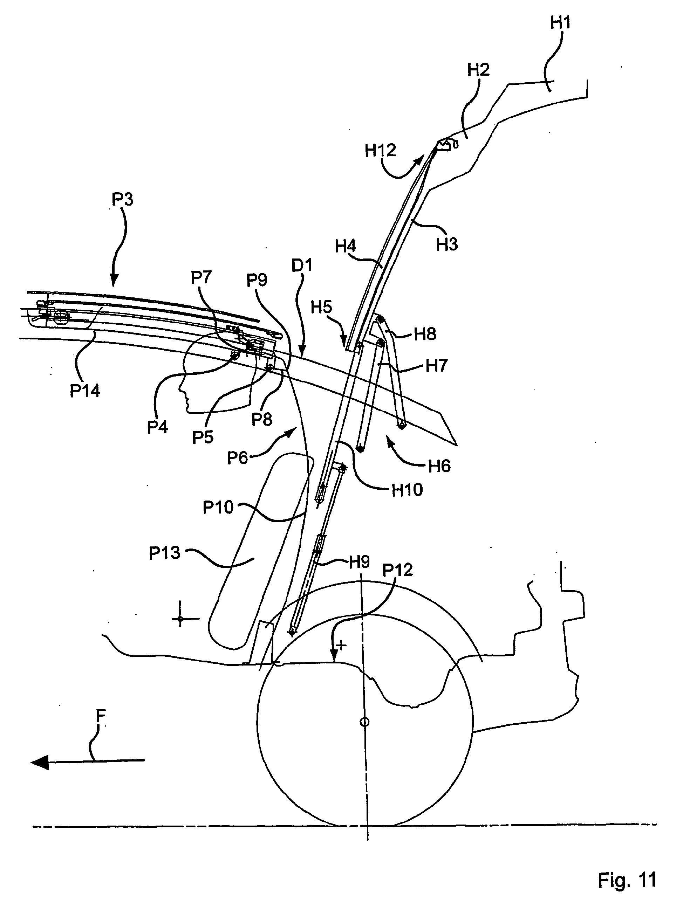

Bei beginnender Ablage des Dachteilpakets P3 in der Karosserie 6 (Übergang von Fig. 11 zu Fig. 12) läuft die vordere P4 der beiden Rollen auf einem aufwärts gerichteten Führungsbahnabschnitt P7 nach hinten, wohingegen die hintere Führungsrolle P5 zunächst in einem nahezu horizontal liegenden Führungsbahnabschnitt P8 läuft. Der Abschnitt P8 mündet an der Stelle P9 in den leicht gekrümmt abwärts laufenden Abschnitt P10 der Führungsschiene P6 ein.

Durch die nach hinten aufwärts gerichtete Steigung des Abschnitts P7 wird mit der beginnenden Bewegung des Dachteilpakets P3 sofort dessen vorderer Rand P11 angehoben, wodurch die Kopffreiheit auch für hinten sitzende Passagiere in keiner Phase der Bewegung unter das Maß bei geschlossenen Dachteilen P1, P2 sinkt. Dies ist ein entscheidender Vorteil.

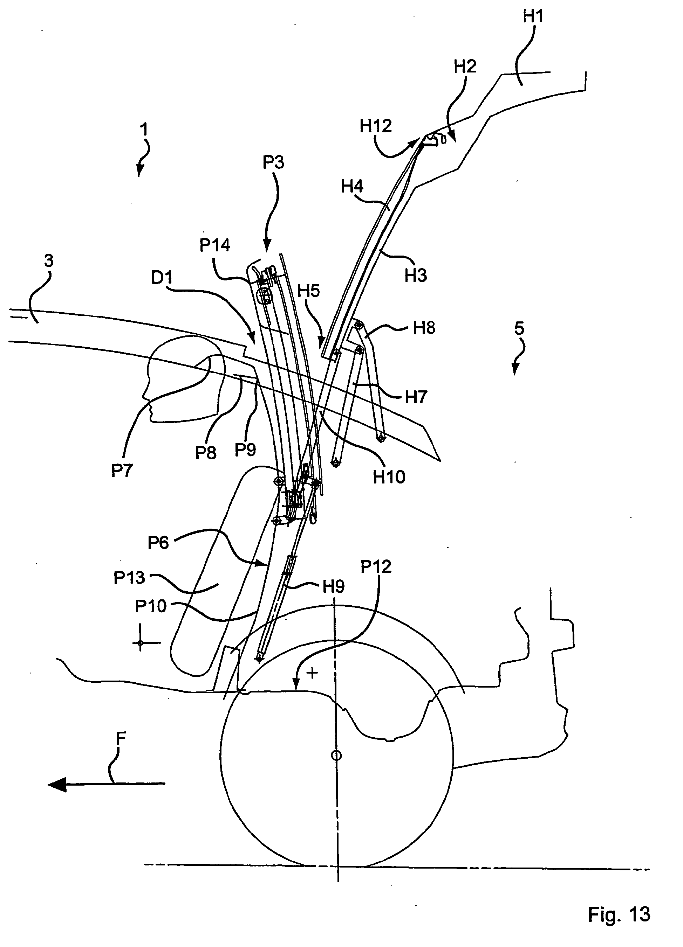

Bei Eintritt der hinteren Führungsrolle P5 in den Abschnitt P10 läuft die vordere Führungsrolle P4 in einem dem Verlauf der seitlichen Dachholme 3 folgenden Abschnitt der Führungsbahn P6, wodurch sich bei der nahezu vertikalen Abwärtsbewegung der hinteren Führungsrolle P5 die Steilstellung des Dachpakets P3 noch verstärkt und dieses bei Eintritt auch der vorderen Führungsrolle P4 in den Abschnitt P10 nahezu senkrecht steht (Fig. 13). In dieser Stellung kann es bis zum inneren Fahrzeugboden P12 abwärts gleiten und raumsparend etwa hinter den Lehnen P13 der zweiten Sitzreihe nahezu vertikal stehen (Fig. 14).

Das Schließen der Dachteile P1, P2 läuft entsprechend umgekehrt ab, wobei auch dort in keiner Phase der Bewegung die Kopffreiheit unter das Maß bei geschlossenen Dachteilen sinkt. Die Fahrzeugsilhouette kann somit sehr flach und sportlich gehalten werden.

Wenn das vordere Dachteil P1 direkt an den Windschutzscheibenrahmen 4 anschließt, läßt sich eine sehr große Dachöffnung herstellen. Auch können die seitlichen Karosseriebereiche 3 oberhalb der Seitenscheiben sehr schmal ausgebildet werden, so daß die Breite der Plattenteile P1 und P2 sich bis fast zur Oberkante der Seitenscheiben erstrecken kann.

Um die Ablage der Dachteile P1 und P2 zu erleichtern, öffnet die Heckklappe H1, wie oben bereits beschrieben, derart, daß in ihrer Offenstellung die vordere Kante H5 gegenüber der geschlossenen Stellung nach hinten verlagert ist. Dadurch ergibt sich in Fahrtrichtung F vor der geöffneten Heckklappe H1 ein Durchtrittsraum D1, der vollständig hinter der in geschlossenem Zustand rückwärtigen Kante des hinteren Dachteils P2 liegt. Damit kann der den Fahrzeuginnenraum durchgreifende Ablageweg des Dachteilpakets P3 weit nach hinten im Fahrzeug 1 verlagert werden. Eventuelle Insassen auf einer hinteren Sitzbank werden davon nicht gestört. Auch bei einem eventuellen Zweisitzer liegt der Ablageweg des Dachteilpakets P3 in jedem Fall hinter den Insassen. Diese werden durch die Dachteilablage nicht in ihrer Kopffreiheit eingeschränkt.

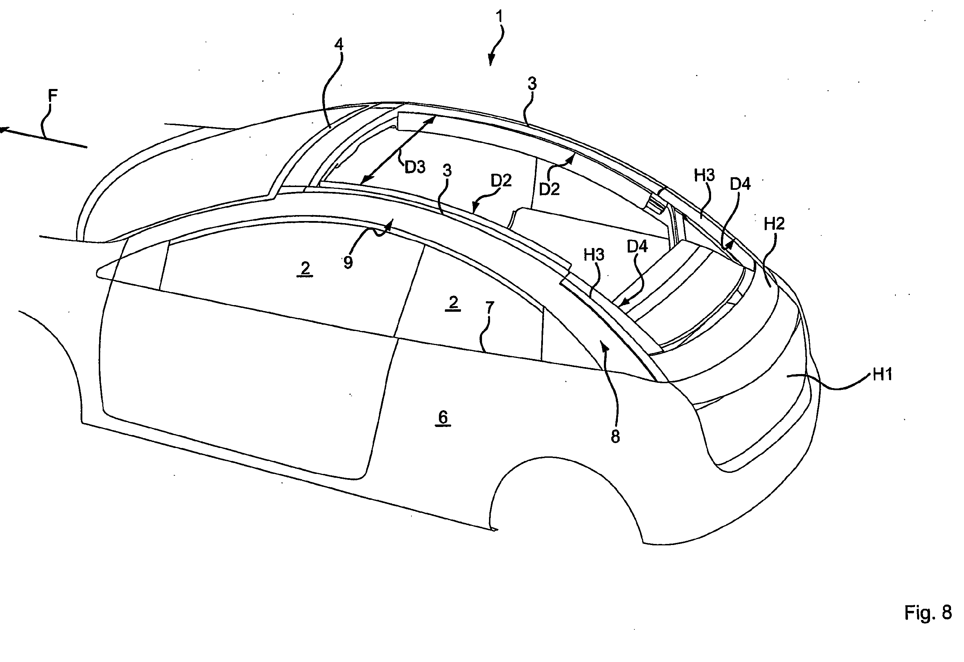

Dabei liegen, was optisch sehr vorteilhaft ist, im geschlossenen Zustand der Heckklappe H1 die die Heckscheibe H4 seitlich einfassenden Rahmenteile H3 fluchtend zu den in Fahrtrichtung nach vorne anschließenden Bereichen 9 der Dachholme 3. Insbesondere ist dann in der der Heckscheibe H4 bzw. den beweglichen Dachteilen P1, P2 zugewandten Innenkante D2 der genannten Teile H3, 3 keine Abstufung erforderlich, sondern diese Kante D2 läuft mit ihrer Fortsetzung D4 über den gesamten Innenraum gradlinig (Fig. 8). Die fluchtende Lage der der vertikalen Fahrzeuglängsmittelebene zugewandten Innenkanten D4 der seitlichen Rahmenteile H3 der Heckklappe H1 und der Innenkanten D2 der Dachholme 3 ist optisch besonders vorteilhaft bei Versenkung aller Dachteile P1, P2, H4. Die dann entstandene große Dachöffnung hat somit einen optisch durchgehenden Längsrandbereich.

Bei Öffnung der Heckklappe H1 wird dennoch ein Durchtrittsraum D1 freigegeben, der breiter als die lichte Weite D3 zwischen den Innenkanten D2 ist. Damit können die Dachteile P1 und P2 sehr breit gestaltet werden. Etwa kann auch noch eine seitlich das Dachteil P2 überragende Führungsschiene P14, in der das vordere Dachteil in seiner Offenstellung geführt ist, mit dem Dachpaket P3 durch den gegenüber der lichten Weite D3 verbreiterten Durchtrittsraum D1 in den Innenraum der Karosserie 6 eintreten.

Zur Öffnung der beiden Teile P1 und P2 sowie der Heckscheibe H4 wird zunächst die Heckklappe H1 geöffnet, um den Durchtrittsraum D1 freizugeben. Anschließend können die Dachteile P1, P2 in der oben geschilderten Weise geöffnet werden.

Aus der geöffneten Stellung der Heckklappe H1 heraus kann vorher oder danach auch die Heckscheibe H4 aus den sie umgebenden Teilen H2, H3 in einer der beschriebenen Arten geöffnet und in platzsparender Parallellage zu den Dachteilen P1 und P2 im Innenraum abgelegt werden. Es ist ebenso möglich, daß entweder nur die Heckscheibe H4, nur das vordere Plattenteil P1, die Heckscheibe H4 und das Plattenteil P1 oder nur die vorderen Dachteile P1 und P2 geöffnet werden, je nach Wunsch.

Die Erfindung ist sowohl bei Fahrzeugen mit manuell zu bewegenden Dachteilen P1, P2, H4 als auch bei voll- oder teilautomatischer Beweglichkeit der Teile anwendbar.

## Patentansprüche

1. Kraftfahrzeug (1) mit einer beweglichen Heckklappe (H1), die seitliche, in Fahrtrichtung ansteigende Rahmenteile (H3) umfaßt, zwischen denen in zumindest einer Stellung eine Heckscheibe (H4) aufgenommen ist und die in geschlossener Stellung der Heckklappe (H1) auf einem rückwärtigen Abschnitt (8) seitlicher Dachholme (3) der Fahrzeugkarosserie (6) aufliegen und einen Teil der Fahrzeugaußenfläche bilden,
**dadurch gekennzeichnet,**
**daß** die Heckklappe (H1) bei ihrer Öffnung mit ihrem in Fahrtrichtung (F) am weitesten vorne liegenden Bereich (H5) entgegen der Fahrtrichtung (F) verlagerbar ist und dabei in dem bei geschlossener Heckklappe (H1) übergriffenen Bereich einen Durchtrittsraum (D1) zur Verlagerung von Dachteilen (P1;P2;H4) in die Fahrzeugkarosserie (6) freigibt.

2. Kraftfahrzeug (1) nach Anspruch 1
**dadurch gekennzeichnet,**
**daß** die seitlichen Rahmenteile (H3) in geschlossener Stellung der Heckklappe (H1) fluchtend zu in Fahrtrichtung (F) anschliessenden und oberhalb von Seitenscheiben (2) verlaufenden Abschnitten (9) der Dachholme (3) des Fahrzeugs (1) liegen.

3. Kraftfahrzeug (1) nach Anspruch 2,
**dadurch gekennzeichnet,**
**daß** der Durchtrittsraum (D1) gegenüber der lichten Weite (D3) zwischen den Dachholmen (3) in Fahrzeugquerrichtung erweitert ist.

4. Kraftfahrzeug (1) nach einem Anspruch 3,
**dadurch gekennzeichnet,**
**daß** bei separat abgesenkter und damit in Freigabestellung befindlicher Heckscheibe (H4) und darüber geschlossenen Rahmenteilen (H3) der Heckklappe (H1) die einer vertikalen Fahrzeuglängsmittelebene zugewandten Kanten (D2;D4) der Dachholme (3) und der seitlichen Rahmenteile (H3) der Heckklappe (H1) stufenlos fluchtend hintereinander liegen.

5. Kraftfahrzeug nach einem der Ansprüche 1 bis 4,
**dadurch gekennzeichnet,**
**daß** sich in geschlossener Stellung der Heckscheibe (H4) an ihre obere und in Fahrtrichtung (F) vordere Kante (H5) anschließend zumindest ein weiteres bewegliches Dachteil (P1;P2) erstreckt, das durch den Durchtrittsraum (D1) in der Fahrzeugkarosserie (6) ablegbar ist.

6. Kraftfahrzeug nach einem der Ansprüche 1 bis 5,
**dadurch gekennzeichnet,**
**daß** die Heckscheibe (H4) gegenüber den sie umgebenden seitlichen Rahmenteilen (H3) separat in eine Freigabestellung verlagerbar ist.

7. Kraftfahrzeug nach Anspruch 6,
**dadurch gekennzeichnet,**
**daß** die Heckscheibe (H4) durch den Durchtrittsraum (D1) in die Fahrzeugkarosserie (6) verlagerbar ist.

8. Kraftfahrzeug nach einem der Ansprüche 1 bis 7.
**dadurch gekennzeichnet,**
**daß** die Heckklappe (H1) außerhalb der Heckscheibe (H4) im wesentlichen U-förmig ausgebildet ist und die Heckscheibe (H4) in ihrer geschlossenen Stellung nur seitlich (H13) und an ihrer Unterkante (H12) umgibt.

9. Kraftfahrzeug nach einem der Ansprüche 1 bis 8,
**dadurch gekennzeichnet,**
**daß** die Heckscheibe (H4) und das oder die weitere(n) Plattenteil(e) (P1; P2) in Offenstellung parallel zueinander liegen.

10. Kraftfahrzeug nach einem der Ansprüche 1 bis 9,
**dadurch gekennzeichnet,**
**daß** der Durchtrittsraum (D1) in Fahrzeuglängsrichtung eine Erstreckungslänge von zumindest 20 cm aufweist.

## Claims

1. A motor vehicle (1) with a movable rear flap (H1), which includes lateral frame parts (H3) rising up in the direction of travel, between which, in at least one position, a rear window (H4) is received and which, in the closed position of the rear flap (H1), lie on a back portion (8) of lateral roof pillars (3) of the vehicle body (6) and form a part of the vehicle outer surface,
**characterised in that**
the rear flap (H1), when it is opened, is displaceable by its area (H5) which lies furthest forward in the direction of travel (F), against the direction of travel (F) and thereby, in the area which is overlaid when the rear flap (H1) is closed, frees a passage space (D1) for the displacement of roof parts (P1; P2; H4) into the vehicle body (6).

2. The motor vehicle (1) according to Claim 1,
**characterised in that**
the lateral frame parts (H3), in the closed position of the rear flap (H1), lie in alignment with portions (9) of the roof pillars (3) of the vehicle (1), which portions (9) are connected in the direction of travel (F) and run above side windows (2).

3. The motor vehicle (1) according to Claim 2,
**characterised in that**
the passage space (D1) is enlarged, in relation to the inner width (D3) between the roof pillars (3), in the vehicle transverse direction.

4. The motor vehicle (1) according to Claim 3,
**characterised in that**
when the rear window (H4) is separately lowered and is thus located in the release position and the frame parts (H3) of the rear flap (H1) are closed thereover, the borders (D2; D4) of the roof pillars (3), which borders (D2; D4) face a vertical vehicle longitudinal midplane, and of the lateral frame parts (H3) of the rear flap (H1), lie in alignment behind one another in a non-stepwise manner.

5. The motor vehicle according to one of Claims 1 to 4,
**characterised in that**
in the closed position of the rear window (H4), at its upper and front border (H5) in the direction of travel (F), at least one further movable roof part (P1; P2) extends in a connecting manner, which can be stored through the passage space (D1) in the vehicle body (6).

6. The motor vehicle according to one of Claims 1 to 5,
**characterised in that**
the rear window (H4), in relation to the lateral frame parts (H3) surrounding it, is separately displaceable into a release position.

7. The motor vehicle according to Claim 6,
**characterised in that**
the rear window (H4) is displaceable through the passage space (D1) into the vehicle body (6).

8. The motor vehicle according to one of Claims 1 to 7,
**characterised in that**
the rear flap (H1) is formed, outside the rear window (H4), in a substantially U-shaped manner and, in its closed position, only surrounds the rear window (H4) laterally (H13) and at its lower border (H12).

9. The motor vehicle according to one of Claims 1 to 8,
**characterised in that**
the rear window (H4) and the further panel part(s) (P1; P2) lie parallel to one another in the open position.

10. The motor vehicle according to one of Claims 1 to 9,
**characterised in that**
the passage space (D1) has an extension length of at least 20cm in the vehicle longitudinal direction.

## Revendications

1. Véhicule automobile (1) comprenant un hayon arrière mobile (H1) qui comprend des parties de cadre latérales (H3), montant dans la direction de conduite, entre lesquelles, dans au moins une position, une vitre arrière (H4) est reçue et qui s'appliquent dans la position fermée du hayon arrière (H1) sur une portion arrière (8) de longerons latéraux du toit (3) de la carrosserie du véhicule (6) et qui forment une partie de la surface extérieure du véhicule,
**caractérisé en ce que**
le hayon arrière (H1), lors de son ouverture, peut être déplacé à l'encontre de la direction de conduite (F) avec sa région (H5) située le plus en avant dans la direction de conduite (F), et libère en l'occurrence, dans la région saisie par le haut lorsque le hayon arrière (H1) est fermé, un espace de passage (D1) pour le déplacement de parties du toit (P1 ; P2 ; H4) dans la carrosserie du véhicule (6).

2. Véhicule automobile (1) selon la revendication 1,
**caractérisé en ce que**
les parties de cadre latérales (H3), dans la position fermée du hayon arrière (H1), sont en affleurement avec des portions (9) des longerons de toit (3) du véhicule (1) se raccordant dans la direction de conduite (F) et s'étendant au-dessus des vitres latérales (2).

3. Véhicule automobile (1) selon la revendication 2,
**caractérisé en ce que**
l'espace de passage (D1) est élargi par rapport à la largeur intérieure (D3) entre les longerons de toit (3) dans la direction transversale du véhicule.

4. Véhicule automobile (1) selon la revendication 3,
**caractérisé en ce que**
lorsque la vitre arrière (H4) est abaissée séparément et se trouve ainsi dans la position de libération, et que les parties de cadre (H3) du hayon arrière (H1) sont fermées par-dessus, les arêtes (D2 ; D4) des longerons de toit (3) et des parties de cadre latérales (H3) du hayon arrière (H1), tournées vers un plan médian longitudinal du véhicule, sont disposées en continu et en affleurement les unes derrière les autres.

5. Véhicule automobile selon l'une quelconque des revendications 1 à 4,
**caractérisé en ce que**
dans la position fermée de la vitre arrière (H4), se raccordant au niveau de son arête (H5) supérieure et avant dans la direction de conduite (F), s'étend au moins une autre partie de toit mobile (P1 ; P2), qui peut être déposée à travers l'espace de passage (D1) dans la carrosserie du véhicule (6).

6. **Véhicule automobile selon l'une quelconque des revendications** 1 à 5,
**caractérisé en ce que**
la vitre arrière (H4) peut être déplacée séparément dans une position de libération par rapport aux parties de cadre latérales (H3) qui l'entourent.

7. Véhicule automobile selon la revendication 6,
**caractérisé en ce que**
la vitre arrière (H4) peut être déplacée à travers l'espace de passage (D1) dans la carrosserie du véhicule (6).

8. Véhicule automobile selon l'une quelconque des revendications 1 à 7,
**caractérisé en ce que**
le hayon arrière (H1) est réalisé en dehors de la vitre arrière (H4) essentiellement en forme de U et entoure la vitre arrière (H4) dans sa position fermée uniquement latéralement (H13) et au niveau de son arête inférieure (H12).

9. Véhicule automobile selon l'une quelconque des revendications 1 à 8,
**caractérisé en ce que**
la vitre arrière (H4) et la ou les parties de plaque supplémentaires (P1 ; P2) sont situées parallèlement les unes aux autres dans la position ouverte.

10. Véhicule automobile selon l'une quelconque des revendications 1 à 9,
**caractérisé en ce que**
l'espace de passage (D1) présente dans la direction longitudinale du véhicule une étendue en longueur d'au moins 20 cm.
